# FASCICULE DE BREVET EUROPEEN

(11) **EP 1 277 445 B1**
(45) Date de publication et mention de la délivrance du brevet: **08.06.2005**
(21) Numéro de dépôt: 02291842.9
(22) Date de dépôt: 19.07.2002
(51) Int. Cl.: A61B 17/70, B65D 81/20, B65D 85/76, A23C 19/068

(54) **Conditionnement de fromage tranché dans un emballage de type sachet ou barquette operculée**
Verpackung in Beutelform oder als Schalenverpackung mit Abdeckfolie für Käsescheiben
Packaging, of the type bag or packaging tray closed by a film, for sliced cheese

(30) Priorité: 20.07.2001 FR 0109775
(43) Date de publication de la demande: 22.01.2003
(73) Titulaire: B.S.A. (Societe Anonyme), 75007 Paris (FR)
(72) Inventeur: Georgeault, Pierre, 35000 Rennes (FR); Dumont, Thierry, 44240 Suce sur Erdre (FR)
(74) Mandataire: Dupuis-Latour, Dominique

(56) Documents cités:
- EP-A- 0 299 845
- EP-A- 1 041 010
- EP-A- 1 184 298
- FR-A- 2 598 289
- FR-A- 2 796 626
- US-A- 4 069 348

## Description

L'invention concerne un article alimentaire à longue conservation selon le préambule de la revendication 1, et le conditionnement de portions de produits fromagers tranchés dans des emballages fermés de manière étanche, de type sachet ou barquette operculée.

Les emballages de ce type sont très utilisés dans l'industrie agro-alimentaire. Dans le domaine des fromages, ils sont couramment employés pour le conditionnement des fromages à pâte pressée cuite, tels que l'emmental, qui sont des fromages qui supportent bien ce type de conditionnement.

En effet, ces emballages sont par nature hermétiques et ne conviennent qu'à des fromages dont l'activité biologique et respiratoire est faible, qui peuvent donc conserver leurs propriétés gustatives et d'aspect visuel pendant toute la durée de conservation sans altération notable.

En revanche, ce type d'emballage est jusqu'à présent exclu pour les fromages dont le goût, la texture et l'aspect peuvent évoluer négativement si certaines conditions de respect du métabolisme ne sont pas vérifiées. Ainsi, les fromages à pâte molle fleurie tels que camembert, coulommiers, brie, chaource et de nombreux fromages de chèvre ont des fleurs constituées de *Penicillium*, ou de *Penicillium* et *Geotrichum*, qui sont des micro-organismes vivants qui "respirent" tout au long de la durée de conservation du fromage en consommant de l'oxygène et en dégageant du gaz carbonique, de l'ammoniac et de la vapeur d'eau.

Pour respecter ces conditions, lorsqu'ils ne sont pas vendus à la coupe ces fromages sont conservés dans des emballages primaires non fermés de manière étanche (habillage par une feuille souple), pour permettre les échanges gazeux nécessaires au métabolisme.

La situation est comparable avec les fromages à pâte molle levurée dont les fleurs sont constituées de levures et de *Geotrichum*, tels que les crottins de chèvre ou les briques de vache, chèvre et brebis.

Pourtant, il serait avantageux de pouvoir conditionner en portion ces fromages dans des emballages de type sachet ou barquette operculée, ce qui permettrait d'éviter une logistique spécifique lorsque ces produits sont vendus dans la distribution, et permettrait en outre de diversifier l'offre de fromages dans certains marchés tels que les collectivités ou la "restauration hors foyer", c'est-à-dire les portions alimentaires à emporter, pour consommation individuelle dans la journée. Les circuits commerciaux de ces marchés imposent des durées de conservation longues, qu'il n'a jusqu'à présent pas été possible d'appliquer aux familles de fromages en portion indiquées ci-dessus.

Il existe diverses tentatives de conditionnement de portions de fromages à croûte fleurie dans des emballages de type sachet ou barquette operculée, mais qui n'ont pas abouti à des résultats véritablement satisfaisants.

La solution consistant à conditionner le fromage dans un sachet thermorétractable, de manière à ne laisser subsister pratiquement aucune atmosphère gazeuse à l'intérieur du sachet, n'est pas très satisfaisante en pratique car, dans le cas des fromages cités plus haut, la dégradation est assez rapide, ce qui ne permet pas d'avoir des durées de conservation longues.

Une autre solution consiste à stériliser le fromage, pour tuer les microorganismes et bloquer ainsi l'évolution du fromage en arrêtant tout métabolisme. Cette solution est compatible avec une durée de conservation très longue, mais elle a pour inconvénient de rendre le produit insipide, ce qui lui enlève beaucoup d'intérêt notamment sur les marchés européens où le consommateur est très sensible à la saveur du produit.

De plus, cette solution exclut bien entendu le bénéfice d'un label AOC, la nature du produit ne devant pas être substantiellement modifiée pour que cette appellation puisse être autorisée.

Une autre solution encore consiste à conditionner le fromage dans un emballage hermétique en injectant dans celui-ci un mélange CO₂/O₂ ou N₂/CO₂ de manière à créer autour du fromage une atmosphère contenant l'oxygène nécessaire à la respiration du produit (CO₂/O₂) ou, au contraire, empêchant cette respiration (N₂/CO₂).

Dans ce cas, la difficulté réside dans l'évolution sur le long terme de l'atmosphère contrôlée du fait du métabolisme du produit.

Ainsi, dans le cas évoqué plus haut d'un fromage à croûte fleurie :
- en l'absence d'oxygène (anaérobiose), ou avec une teneur en oxygène insuffisante (notamment du fait de l'épuisement de l'oxygène dans l'atmosphère contrôlée du fait de la respiration des micro-organismes), la fleur devient rapidement humide et la pâte prend un goût atypique ne correspondant pas à la définition du produit (acide, rance, goût de "bleu");
- inversement, si le taux d'oxygène est trop élevé, le métabolisme s'accélère et, tout particulièrement si le fromage est conditionné avec une surface tranchée (par exemple une part de brie), une fleur apparaît rapidement sur la tranche, rendant le produit très peu attrayant visuellement pour le consommateur, même si les qualités gustatives de la pâte ne sont pas substantiellement altérées.

Pour mieux contrôler l'atmosphère interne de l'emballage, le document EP-A-0 299 845 (Bongrain) propose d'utiliser une boîte comportant une fenêtre fermée par une membrane à perméabilité sélective autorisant un échange gazeux entre l'atmosphère interne de la boîte et l'environnement extérieur.

Mais le but recherché par ce document est la poursuite de l'affinage du fromage : au lieu d'emballer ce dernier dans un "complexe d'emballage" (feuille souple en contact avec le fromage emballé) avant de le mettre dans la boîte, comme cela se pratique par exemple avec les camemberts ou fromages à pâte molle analogues, le fromage est placé nu dans la boîte pour permettre un développement aérobie des micro-organismes.

Le but recherché par ce document est de pouvoir conditionner le fromage plus tôt au cours de son processus de maturation, en permettant une poursuite de l'affinage pendant le stockage ultérieur. Mais une fois affiné à point, le fromage doit être rapidement consommé.

Ce document ne vise donc pas le même but que la présente invention, à savoir l'obtention d'une longue durée de conservation, sans dégradation, pour un produit déjà affiné et tranché.

Ce terme de "durée de conservation" sera ici entendu comme la durée pendant laquelle, une fois distribué (c'est-à-dire mis en rayon dans un magasin ou livré à un restaurateur), le produit peut être consommé sans modification substantielle ni de son aspect ni de son goût : dans le cas par exemple d'un produit acheté en magasin, le fromage doit présenter à peu près le même goût et le même aspect, qu'il soit consommé peu après son achat ou plusieurs jours après, cette durée pouvant s'étendre jusqu'à deux à quatre semaines.

En d'autres termes, l'invention cherche à prolonger la durée de conservation d'un fromage "préaffiné", c'est-à-dire ayant déjà subi un processus d'affinage avant d'être tranché et conditionné - ceci à l'opposé du EP-A-0 299 845, où le fromage n'est pas ou peu affiné (et n'est d'ailleurs pas tranché) au moment de son conditionnement et où il est donc nécessaire de prévoir une durée minimale suffisante de stockage après conditionnement et avant commercialisation.

L'utilisation d'un conditionnement de fromage avec un film à perméabilité sélective a été également proposée par le document EP-A-1 041 010 (Bel), ce document décrivant un article alimentaire selon le préambule de la revendication 1.

Ce document cherche à assurer la stabilisation et la survie sans altération ni destruction importante de la flore de surface des fromages dits "à croûte naturelle mixte", qui est une catégorie très particulière de fromages caractérisée par la présence dans la flore de surface de bactéries corynéformes et de microcoques. Les bactéries corynéformes telles que *Brevibacterium linens* donnent au fromage des caractéristiques organoleptiques et de texture très particulière, reconnaissables notamment à la couleur rouge de la croûte (un représentant typique de cette famille étant le livarot), tandis que les microcoques sont des micro-organismes ayant essentiellement une fonction d'aide à l'affinage.

Ce type particulier de fromage (à croûte naturelle mixte), très spécifique, ne correspond pas à la catégorie de fromages à laquelle s'intéresse la présente invention : la flore des fromages à croûte fleurie (camembert, brie, coulommiers, etc.) est en effet principalement constituée de *Penicillium,* avec éventuellement *Geotrichum*, mais ne contient que des quantités minimes, et non recherchées, de bactéries corynéformes ou microcoques.

Ainsi, l'art antérieur n'a jamais abordé - *a fortiori* résolu - le problème particulier de l'invention tel qu'indiqué plus haut, qui est celui de la préservation des portions de fromages préaffinés à croûte fleurie tranchés avant leur conditionnement.

Selon l'invention, cette préservation doit être assurée après conditionnement du fromage de manière à permettre une conservation pendant une longue durée, typiquement jusqu'à 18 à 45 jours, de préférence sans additif, sans altération sensible de l'aspect visuel des tranches.

Comme on l'a indiqué plus haut, le fromage est conditionné à l'état préaffiné, c'est-à-dire qu'il peut être éventuellement consommé tout de suite, la "conservation" indiquée plus haut impliquant une stabilisation de l'affinage préalablement opéré, sans évolution néfaste ni du goût ni de l'aspect du produit.

On notera à cet égard que le tranchage du fromage implique que celui-ci soit déjà préaffiné : le préaffinage donne au fromage son intégrité, la croûte isolant la pâte de l'atmosphère extérieure.

À cet effet, l'invention propose un article alimentaire du type général exposé par le EP-A-1 041 010, et comprenant les caractéristiques visées par la revendication 1. Les sous-revendications visent des mises en oeuvre avantageuses.

Ainsi, la surface d'échange et la perméabilité aux gaz du film doivent être choisies pour que l'oxygène présent dans l'atmosphère de l'emballage soit consommé de manière quasi-exclusive par la fleur, et ceci quelque soit le moment considéré pendant toute la durée du stockage. La partie tranchée, quant à elle, possède une moindre activité respiratoire et de ce fait la quantité d'oxygène sera insuffisante pour provoquer une dégradation notable (par repousse de moisissures, oxydation de la pâte, etc.). En d'autres termes, le niveau de perméabilité du film doit être défini pour laisser passer une quantité d'oxygène équivalente à la consommation de la fleur.

### Exemple 1

Dans cet exemple on a testé un fromage à croûte fleurie, à fleur *Penicillium,* produit sous forme d'un lingot affiné, donc dans un état permettant à ce produit d'être immédiatement consommé.

Le lingot a été tranché en limitant au maximum l'entraînement de particules de fleur sur la tranche afin de réduire les risques de repousse. Il a été ainsi préparé seize tranches de taille 110 x 43 x 8 mm chacune, pour un poids moyen de 37 g et une surface de fleur de 32 cm² par tranche.

Ces seize tranches ont été placées dans un emballage en forme de barquette operculée, avec mise en place d'intercalaires entre les tranches successives d'un même empilement. Le volume total occupé par les seize tranches était de 610 cm³ environ.

Cet emballage était constitué d'une barquette thermoformée à partir d'une feuille PVC/PE (polychlorure de vinyle/polyéthylène) de format intérieur 260 x 95 x 47 mm et de contenance 1160 cm³. L'opercule était constituée d'un complexe OPA/PE (polyamide orienté/polyéthylène) 16µm/50 µm microperforé de manière à assurer une perméabilité au gaz nominale d'environ 38700 cm³/m²/24 h/atm).

Les intercalaires avaient un format de 260 x 90 mm et étaient réalisés à partir d'un kraft 40 g/m² paraffiné sur les deux faces, ou bien d'un papier sulfurisé 32 g/ m^{2.} Les deux types d'intercalaires ont donné des résultats sensiblement identiques, procurant une faible adhérence au produit, une manipulation aisée et une faible absorption de l'humidité. Le papier sulfurisé présente l'avantage d'une meilleure perception par le consommateur par rapport au kraft paraffiné et, en outre, il peut être traité par enduction d'un inhibiteur de repousse de la fleur tel que le sorbate de calcium.

Un certain nombre de barquettes operculées ainsi préparées contenant les tranches de fromage ont été conservées à une température ambiante de l'ordre de 2 à 4 °C, et ont été examinées à J0, J+7, J+14 et J+21.

Les paramètres examinés ont été : l'aspect visuel des tranches de fromage, leur goût, leur texture, les taux d'oxygène et de gaz carbonique de l'atmosphère intérieure de la barquette (toutes les teneurs sont données en volume), ainsi que la température au coeur du produit.

Les résultats de ces observations sont les suivants :
- À J0 :
   * aspect blanc, fleur fine ; goût neutre, légèrement acide, texture légèrement collante
   * 2,7 % O₂ / 30,5 % CO₂ / 8 °C
- À J+7 :
   * aspect : intercalaires secs, pas de repousse sur tranche ; bon goût ; texture correcte.
   * 1,7 % O₂ / 26,5 % CO₂ / 9,7 °C
- À J+14 : goût légèrement acide
   * aspect : très légère repousse sur les bords ;
   * 1,2 % O₂ / 27,2 % CO₂ / 7,6 °C
- À J+21 :
   * aspect : pâte légèrement grise sous la fleur, très peu de repousse ; léger goût acidulé, léger goût de bleu sur portions de base de l'empilement
   * 1,5 % O₂ / 27,2 % CO₂ / 7,9 °C.

On constate ainsi que, même à J+21 et sous des conditions de conservation sévères au niveau de la température, le produit est jugé tout à fait acceptable tant en termes de goût que d'aspect.

Le même produit, conservé dans un emballage fermé et formant barrière aux gaz, est dégradé à J+7 (aspect : pas de repousse sur tranche, fleur humide, goût de rance ; 0,7 % O₂ / 41 % CO₂).

On a pu observer que le taux d'oxygène à l'intérieur de l'emballage restait très faible (1,8 % en moyenne), et surtout très régulier (écart-type = 0,6). On peut estimer que la quasi-totalité de l'oxygène disponible au sein de l'emballage au moment de la fermeture de celui-ci a été consommé par la fleur existante lors du conditionnement et que, à aucun moment, la quantité d'oxygène disponible n'a été suffisante pour permettre un développement de fleur sur la tranche. En d'autres termes, un faible écart-type est ici révélateur d'une stabilité des échanges gazeux entre le fromage et le volume intérieur de l'emballage, stabilité propice à une longue conservation.

En pratique, on notera que le taux moyen d'oxygène peut varier en fonction du volume relatif de l'emballage par rapport à celui des portions de fromage. En d'autres termes, pour un emballage très compact, laissant subsister un faible volume d'atmosphère intérieure, le taux d'oxygène peut être plus élevé que dans le cas contraire, car une teneur plus élevée en oxygène sera compensée par une plus faible quantité (en valeur absolue) d'oxygène disponible à l'intérieur de l'emballage. Concrètement, l'emballage doit être conçu pour distribuer la quantité la plus faible possible d'oxygène au fromage, la limite étant bien entendu l'anaérobiose.

En ce qui concerne le taux de gaz carbonique à l'intérieur de l'emballage, celui-ci est régulier (écart-type = 1,8), avec une valeur moyenne de 27,9 %. Cette régularité accrédite ici encore l'hypothèse d'un équilibre stable en termes d'activité biologique du fromage.

La température du produit est également stable (moyenne 8,3°C, écart-type = 0,9), avec un léger pic à J+7 observé sur la quasi-totalité des essais, parfois corrélé avec une baisse du taux du gaz carbonique au sein de l'emballage.

### Exemple 2

Cet exemple reprend les mêmes paramètres opératoires que l'Exemple 1, avec un produit de nature différente, l'emballage restant identique (barquette PVC/PE de format 260 x 95 x 47 mm avec opercule OPA/PE de perméabilité 38700 cm³/m²/24 h/atm). Le fromage est un brie de Meaux AOC de 360 mm de diamètre et 21 mm d'épaisseur. Deux portions de 1/12^{e} (250 grammes par portion) ont été conditionnées dans les barquettes. La surface de la fleur était de 200 cm² pour chaque portion.

Les résultats des observations sont les suivants :
- À J+7 :
   * très belle fleur, coeur lactique, jeune produit peu aromatique, agréable en goût
   * 2,1 % O₂ / 20,2 % CO₂ / 4,7 °C
- À J+14 :
   * belle fleur, pas de repousse sur tranche, très bon produit, aromatique
   * 2,9 % O₂/19,4 % CO₂/4,7 °C
- À J+21 :
   * belle fleur, pas de repousse sur tranche, croûte marquée en bouche, bon produit
   * 4,6 % O₂/16,6 % CO₂ / 4,5 °C.
- À J+28 :
   * fleur jaunissante, sèche, épaisse, pâte correcte, pas de repousse sur tranche, très bon produit en goût, affiné
   * 3,5 % O₂/18,6 % CO₂ / 4,4 °C
- À J+35 :
   * fleur jaunissante, sèche, pâte légèrement verdâtre, pas de repousse sur tranche, bon produit en goût mais moyennement aromatique par rapport à son âge
   * 5,7 % O₂ / 16,6 % CO₂/4,1 °C
- À J+40 :
   * fleur sèche, pâte verdâtre, pas de repousse sur tranche, produit faible en goût
   * 6,0 % O₂ / 17,5 % CO₂ / 4,2 °C.

## Revendications

1. Un article alimentaire à longue conservation, **caractérisé en ce qu'**il comprend :
- une portion d'un fromage, et
- un emballage fermé enveloppant cette portion de fromage, cet emballage comportant une paroi d'un film à perméabilité sélective apte à réguler la teneur en oxygène et en gaz carbonique du volume gazeux inteme de l'emballage par échange gazeux entre ce volume interne et l'atmosphère extérieure ambiante,
**caractérisé en ce que** :
- le fromage est un fromage pré-affiné du type pâte molle à croûte fleurie non mixte,
- la portion présente une surface tranchée laissant apparaître le coeur du fromage, et une surface de croûte conservée avec sa fleur,
- la teneur en oxygène du volume gazeux interne est, dans la limite de l'anaérobiose, inférieure à 3% v/v pendant au moins la majeure partie de la durée de conservation de l'article,
de manière à essentiellement permettre une poursuite de l'activité métabolique de la fleur sur la surface de croûte, tout en évitant le développement d'une fleur et/ou de microorganismes indésirables sur la surface tranchée.

2. L'article alimentaire de la revendication 1, comprenant un empilement d'une pluralité desdites portions de fromage, dans lequel il est en outre prévu des feuilles intercalaires entre les surfaces tranchées en vis-à-vis de deux portions adjacentes.

3. L'article alimentaire de la revendication 1, dans lequel la teneur en gaz carbonique du volume gazeux interne est inférieure à 40% v/v, de préférence comprise entre 15 et 30%, pendant au moins la majeure partie de la durée de conservation de l'article.

4. L'article alimentaire de la revendication 1, dans lequel le taux d'hygrométrie du volume gazeux interne est supérieur à 75% v/v, de préférence compris entre 90 et 98%, pendant au moins la majeure partie de la durée de conservation de l'article.

5. L'article alimentaire de la revendication 1,
- comprenant en outre un agent absorbeur de vapeur d'eau apte à réguler le taux d'hygrométrie du volume gazeux interne,
- et dans lequel le taux d'hygrométrie du volume gazeux interne est supérieur à 85% v/v, de préférence compris entre 90 et 100%, pendant au moins la majeure partie de la durée de conservation de l'article.

## Patentansprüche

1. Nahrungsartikel zur langen Aufbewahrung, **dadurch gekennzeichnet, dass** er umfasst:
- eine Portion eines Käses, und
- eine geschlossene Verpackung, welche diese Portion Käse umhüllt, wobei diese Verpackung eine Wand einer Folie von selektiver Durchlässigkeit aufweist, die imstande ist, den Gehalt an Sauerstoff und Kohlendioxid des inneren Gasvolumens der Verpackung durch Gasaustausch zwischen diesem inneren Volumen und der umgebenden äußeren Atmosphäre zu regeln,
**dadurch gekennzeichnet, dass**:
- der Käse ein nicht-gemischter, vor-veredelter Käse vom Typ Weichkäse mit Schimmelrinde ist,
- die Portion eine geschnittene Oberfläche aufweist, welche das Innere des Käses erscheinen lässt, und eine mit ihrem Schimmel beibehaltene Rindenoberfläche,
- der Sauerstoffgehalt des inneren Gasvolumens, innerhalb der Grenzen der Anaerobiose, während mindestens des Hauptteils der Aufbewahrungsdauer des Artikels kleiner als 3 % v/v ist,
um im Wesentlichen einen weiteren Ablauf der metabolischen Aktivität des Schimmels auf der Rindenoberfläche zu erlauben, während die Entwicklung eines Schimmels und/oder von unerwünschten Mikroorganismen auf der geschnittenen Oberfläche vermieden wird.

2. Nahrungsartikel nach Anspruch 1, umfassend einen Stapel einer Vielzahl der Käseportionen, in welchem ferner Trennblätter zwischen den geschnittenen Oberflächen gegenüber von zwei benachbarten Portionen vorgesehen sind.

3. Nahrungsartikel nach Anspruch 1, in welchem der Gehalt an Kohlendioxidgas des inneren Gasvolumens kleiner als 40 % v/v ist, vorzugsweise zwischen 15 und 30 % liegend, während mindestens des Hauptteils der Aufbewahrungsdauer des Artikels.

4. Nahrungsartikel nach Anspruch 1, in welchem die relative Luftfeuchtigkeit des inneren Gasvolumens größer als 75 % v/v ist, vorzugsweise zwischen 90 und 98 % liegend, während mindestens des Hauptteils der Aufbewahrungsdauer des Artikels.

5. Nahrungsartikel nach Anspruch 1,
- ferner umfassend einen Wirkstoff, welcher den Wasserdampf absorbiert, der imstande ist, die relative Luftfeuchtigkeit des inneren Gasvolumens zu regulieren,
- und in welchem die relative Luftfeuchtigkeit des inneren Gasvolumens größer als 85 % v/v ist, vorzugsweise zwischen 90 und 100 % liegend, während mindestens des Hauptteils der Aufbewahrungsdauer des Artikels.

## Claims

1. A shelf-stable food article, **characterized in that** it comprises:
· a portion of cheese; and
· a closed package containing said portion of cheese, the package having a wall of a film with selective permeability suitable for controlling the oxygen and carbon dioxide contents of the internal volume of gas within the package by exchanging gases between said internal volume and the surrounding external atmosphere;
the article being **characterized in that**:
· the cheese is a pre-matured cheese of the non-mixed soft type with a bloomy rind;
· the portion presents a cut surface showing the core of the cheese, and a rind surface retained with its bloom; and
· the oxygen content of the gas in the internal volume is, within the limit of anaerobiosis, less than 3% by volume during at least the majority of the shelf life of the article,
in such a manner as to make it possible essentially to continue metabolic activity of the bloom on the surface of the rind, while avoiding the development of undesirable bloom and/or microorganisms on the cut surface.

2. The food article of claim 1, comprising a stack of a plurality of said portions of cheese, in which separator sheets are also provided between the facing cut surfaces of two adjacent portions.

3. The food article of claim 1, in which the carbon dioxide gas content of the gas in the internal volume is less than 40% by volume, and preferably lies in the range 15% to 30%, during at least the majority of the shelf life of the article.

4. The food article of claim 1, in which the humidity of the internal gas volume is greater than 75% by volume, preferably lying in the range 90% to 98%, during at least the majority of the shelf life of the article.

5. The food article of claim 1,
. further comprising a water vapor absorber agent suitable for regulating the humidity of the gas in the internal volume; and
. in which the humidity of the gas in the internal volume is greater than 85% by volume, preferably lying in the range 90% to 100%, during at least the majority of the shelf life of the article.
